# EUROPÄISCHE PATENTSCHRIFT

(11) **EP 2 826 227 B1**
(45) Veröffentlichungstag und Bekanntmachung des Hinweises auf die Patenterteilung: **15.07.2020**
(21) Anmeldenummer: 13709892.7
(22) Anmeldetag: 13.03.2013
(51) Int. Cl.: H04L 29/12, G08B 25/00

(54) **VERFAHREN ZUM BETREIBEN EINES NETZWERKS**
METHOD FOR OPERATING A NETWORK
PROCÉDÉ D'EXPLOITATION D'UN RÉSEAU

(30) Priorität: 14.03.2012 DE 102012203960
(43) Veröffentlichungstag der Anmeldung: 21.01.2015
(73) Patentinhaber: Robert Bosch GmbH, 70442 Stuttgart (DE)
(72) Erfinder: TUERMER, Joerg, 85560 Ebersberg (DE)
(86) Internationale Anmeldenummer: PCT/EP2013/055139
(87) Internationale Veröffentlichungsnummer: WO 2013/135767

(56) Entgegenhaltungen:
- EP-A1- 0 493 905
- EP-A2- 0 485 878
- EP-A2- 0 485 878
- WO-A1-2009/010745
- WO-A1-2009/010745
- DE-A1- 10 240 832

## Beschreibung

Die Erfindung betrifft ein Verfahren und ein Kontrollelement zum Betreiben eines Netzwerks.

### Stand der Technik

Brandmeldeanlagen umfassen in der Regel eine Brandmeldezentrale mit einem Kontrollelement, das über ein als Busnetz ausgebildetes Netzwerk mit mindestens einem Brandmeldegerät verbunden ist, wobei zur Kommunikation ein Busprotokoll verwendet wird. Das Netzwerk wird, ausgehend von der Brandmeldezentrale, oft in einer Schleife zum Ausgangspunkt zurückgeführt, um eine Redundanz bei Kurzschlüssen zu erreichen. Deshalb kann ein Netzabschnitt als Schleife bezeichnet werden.

In einem üblichen existierenden Protokoll weist jeder Brandmelder als Gerät eine eigene Adresse, üblicherweise zwischen 1 und 255, auf, wodurch dem Kontrollelement eine Punkt-zu-Punkt-Kommunikation mit jedem Gerät ermöglicht wird. Außerdem ist vorgesehen, dass jedes Gerät seine Adresse bei einer Einrichtung bzw. Installation erhält, und dabei mit einem sogenannten Programmierwerkzeug programmiert wird, wobei jedes Gerät eine Adresse in einem nichtflüchtigen Speicher speichert.

Die bei der Installation vorgesehene Programmierung wird für jedes Gerät durchgeführt, bevor es erstmalig innerhalb des Netzwerks verwendet wird. Wenn mehr als 100 Geräte in einer Schleife verwendet werden, ist das Programmieren der Geräte vor der Installation aufwendig. Deshalb soll das Programmieren unter Berücksichtigung der Seriennummern der Geräte automatisch durchgeführt werden.

Seriennummern umfassen oft Produktionsmerkmale, wie Herstellungsdatum und Herstellungsort und können daher recht lang werden. Sollen Seriennummern einen Datenbestand aufnehmen, der z. B. in 64 Bit kodiert wird, resultiert eine Anzahl von 2⁶⁴ individuellen Seriennummern. Aufgrund dieser großen Anzahl ergibt sich das Problem, ein einzelnes Gerät mit einer bestimmten Seriennummer innerhalb eines angemessenen Zeitrahmens zu finden.

In der Druckschrift DE 102 40 832 A1 wird ein Bus beschrieben, der einen Master und mehrere Slaves aufweist. In dem Bus wird eine Adressierung der angeschlossenen Slaves anhand der Seriennummer durchgeführt, wobei ein Teilmerkmal durch den Master an die einzelnen Slaves abgefragt wird. Nur wenn ein einziger Slave auf die Frage des Masters antwortet, erhält dieser Slave eine Adresse. Antworten mehrere Slaves oder kein Slave, dann wird die Frage verfeinert.

Die Druckschrift EP 0 485 878 A2 beschreibt ein Verfahren zur Ermittlung einer Konfiguration von Meldern einer Gefahrenmeldeanlage, wobei in jedem Melder herstellerseitig eine binäre Seriennummer gespeichert wird. Hierbei ist vorgesehen, dass jeder Melder in einem Einzeladressier- und Antwortmodus mit einem Strompuls antwortet. Außerdem wird ein binäres Muster, das eine erste und eine zweite Matrix mit Spalten und Zeilen umfasst, berücksichtigt.

In der Druckschrift WO 2009/010745 A1 ist ein Verfahren zum Identifizieren einer Vielzahl elektrischer Geräte beschrieben, wobei jedem Gerät eine Identifikationsnummer zugeordnet ist. Hierbei werden bei Scans Abfragen nach einzelnen Ebenen der Identifikationsnummern durchgeführt, wobei jedes Gerät auf eine Anfrage mit einer Prüfsumme antworten kann.

Aus der Druckschrift DE 102 40 832 A1 ist ein Bus bekannt, der sich dadurch auszeichnet, dass er im Master-Slave betrieben wird und die Adressierung der angeschlossenen Slaves anhand der Seriennummer, die die einzelnen Slaves aufweisen, durchgeführt wird.

In der Druckschrift EP 0 493 905 A1 ist ein Verfahren und eine Vorrichtung zur Identifikation eines entfernten Endgerätes beschrieben.

### Offenbarung der Erfindung

Vor diesem Hintergrund werden ein Verfahren und ein Kontrollelement mit den Merkmalen der unabhängigen Patentansprüche vorgestellt. Weitere Ausgestaltungen der Erfindung ergeben sich aus den abhängigen Patentansprüchen und der Beschreibung.

Mit dem vorgestellten Verfahren ist es nicht mehr erforderlich, für ein Gerät eine Kommunikationsadresse manuell zu programmieren, da ein automatisches Adress-Mapping bzw. eine automatische Adress-Vergabe durchgeführt wird.

In einer Ausführungsform des erfindungsgemäßen Verfahrens wird ein zeiteffizienter Suchalgorithmus zur Suche nach einer eigenen, individuellen Seriennummer für ein zu vereinzelndes Gerät durchgeführt. Sobald bei einer Überprüfung ein Gerät anhand seiner Seriennummer vereinzelt und somit eindeutig von weiteren Geräten in einem bspw. als Bus ausgebildeten Netzwerk unterschieden wurde, wird diesem durch ein üblicherweise zentrales Kontrollelement automatisch eine Adresse zugewiesen und somit zugeordnet. Bei einer Suche nach mindestens einem weiteren Geräte wird bei der Überprüfung eine Vorarbeit und somit ein Vorwissen berücksichtigt, die bzw. das zur Suche mindestens eines zuvor vereinzelten Geräts geleistet wurden.

Befehle, bspw. Busbefehle, die von dem zentralen Kontrollelement gesendet werden, können von allen Geräten auf dem bspw. als Bus ausgebildeten Netzwerk verstanden werden. Es gibt Befehle, die sich an einzelne Geräte richten, und solche, die an Gruppen von Geräten gerichtet sind. Bei der Überprüfung wird eine Eigenschaft von Netzwerken genutzt, die es ermöglicht, bei einer Gruppenabfrage das Vorliegen keiner Antwort oder mindestens einer Antwort von mindestens einem Gerät zu erkennen, was auch bedeuten kann, dass mehr als ein Gerät antwortet. In diesem Fall überlagern sich Antworten von mehreren Geräten zu einem Signal, so dass nicht berücksichtigt wird, wie viele Geräte genau geantwortet haben.

Jedes Gerät führt lokal eine interne Suchmaske, die durch Befehle des zentralen Kontrollelements modifiziert werden kann. Die Suchmaske umfasst in Ausgestaltung für jede zu überprüfende Bitposition einerseits die Information, ob eine k-te Bitposition bei der Suche berücksichtigt werden soll, und andererseits die Information, mit welchem der beiden möglichen Bitwerte die k-te Bitposition gefiltert werden soll.

Durch Suchbefehle der Suchmaske kann abgefragt werden, ob eine Bitposition einer Seriennummer eines Geräts den ersten oder zweiten Bitwert aufweist, wobei die Suchmaske in jeweils einem Gerät kumulativ erweitert wird. Dabei können von einem Gerät mit der Suchmaske auch immer die Bitpositionen und Bitwerte berücksichtigt werden, die seit dem letzten expliziten Zurücksetzen zumindest eines Teils der Suchmaske abgefragt wurden. In einem Bitpositionsspeicher des Kontrollelements wird bei Suchbefehlen für Abfragen zusätzlich gespeichert, nach welchem Bitwert an der jeweiligen Bitposition zuletzt gefragt wurde.

Weiterhin kann eine Reihenfolge zur Überprüfung der Bitpositionen durch Abfragen bestimmt werden, wobei diese Reihenfolge arbiträr ist, jedoch für die komplette Überprüfung eindeutig gewählt wird. Eine bei der Überprüfung gemäß der festgelegten Reihenfolge aktuell zu bearbeitende Bitposition kann als k-te Bitposition bezeichnet werden, wobei k zugleich als Wert und somit als Laufparameter eines die Reihenfolge der Überprüfung begleitenden Zählers eingerichtet werden kann. Die Überprüfung beginnt also mit der zuerst zu überprüfenden Bitposition, für die k = 1 gilt. Für die letzte zu überprüfende Bitposition gilt in Ausgestaltung k = n. Weiterhin kann festgelegt werden, welcher der beiden Bitwerte bei einer ersten und welcher bei einer zweiten Abfrage abgefragt wird, dabei kann ohne Beschränkung der Allgemeinheit für die k-te Bitposition bei der ersten Abfrage der Bitwert 0 und bei der zweiten Abfrage der Bitwert 1 überprüft werden.

In Ausgestaltung wird die Reihenfolge von der höchsten Bitposition der Seriennummer absteigend zur niedrigsten, ersten Bitposition eingestellt. In diesem Fall ist die höchste Bitposition die zuerst zu überprüfende Bitposition und die erste Bitposition die zuletzt zu überprüfende Bitposition. Bei einer alternativen, umgekehrten Reihenfolge wird zuerst die erste und zuletzt die höchste Bitposition überprüft.

Das Verfahren beginnt üblicherweise damit, dass ein Befehl zum Löschen aller Bits der Suchmaske gesendet wird. Dadurch wird für jedes Gerät, das bislang keine gültige Adresse aufweist, die Suchmaske für die Seriennummern komplett zurückgesetzt. Im Kontrollelement wird weiterhin ein interner Bitabfragespeicher zurückgesetzt, in dem für jede Bitposition gemerkt wird, ob und mit welchem Bitwert diese Bitposition zuletzt mit einer ersten oder zweiten Abfrage überprüft wurde.

Bei der Überprüfung, die auch als Hauptiteration bezeichnet werden kann, wird im Bitabfragespeicher für die k-te Bitposition überprüft, ob für diese bereits mindestens eine Abfrage durchgeführt wurde. Hierbei kann üblicherweise zwischen drei Fälle unterschieden werden.

Falls im Bitabfragespeicher für diese k-te Bitposition keine gespeicherte Abfrage vorliegt, wird ein Befehl zum Festsetzen der k-ten Bitposition in den Suchmasken der Geräte und zum Festsetzen des ersten Bitwerts geschickt. Jedes Gerät, dessen Seriennummer in den Bitpositionen, die in bisherigen Suchmaskenbefehlen abgefragt wurden, wobei die Bitwerte an den jeweiligen Bitpositionen übereinstimmen, antwortet auf die Abfrage.

Für den Fall, dass im Bitabfragespeicher für diese k-te Bitposition bereits eine gespeicherte erste Abfrage für den ersten Bitwert vorliegt, wird ein Suchmaskenbefehl zum Festsetzen der k-ten Bitposition in den Suchmasken der Geräte und zum Festsetzen des zweiten Bitwerts geschickt. Jedes Gerät, dessen Bitwerte in den Bitpositionen der Seriennummer, die mit bisherigen Suchmaskenbefehlen abgefragt wurden, übereinstimmt, antwortet auf die Abfrage.

Falls im Bitabfragespeicher für diese k-Bitposition bereits eine gespeicherte zweite Abfrage nach dem zweiten Bitwert vorliegt, werden im Bitabfragespeicher alle Einträge für Bitposition k gelöscht. Weiterhin wird an alle Geräte ein Suchmaskenbefehl geschickt, der den Suchmaskeneintrag für die k-te Bitposition löscht. k wird um eins verringert. Ist k = 1, so ist die Überprüfung komplett beendet. Ansonsten wird das Verfahren mit dem Beginn der Überprüfung fortgeführt.

Falls bei einer Abfrage keine Antwort erhalten wird, wird davon ausgegangen, dass keine nicht-zugeordneten Geräte in einer Schleife des Netzwerks vorhanden sind, deren k-te Bitposition der Seriennummer den ersten Bitwert aufweist. Das Verfahren wird dann mit dem Beginn der Überprüfung fortgesetzt.

Falls eine Antwort erhalten wird, wird geprüft, ob k = n ist und somit die zuletzt zu überprüfende Bitposition erreicht wurde. In diesem Fall hat das antwortende Gerät einen internen Marker gesetzt, der es empfänglich für eine Adressvergabe macht. Aufgrund der beschriebenen Vorgehensweise ist zu diesem Zeitpunkt nur ein einzelnes Gerät identifiziert, da jedes Gerät eine Seriennummer mit einem eigenen Bitmuster aufweist. Sobald alle zu überprüfenden Bitpositionen festgelegt sind, ist sichergestellt, dass nur noch die Seriennummer eines einzigen Geräts mit der Suchmaske übereinstimmt. Falls k ungleich 1 ist, wird k um eins verringert und das Verfahren mit dem Beginn der Hauptiteration fortgeführt.

Bei einer Adressierung von Geräten kann einem einzelnen Gerät von dem Kontrollelement eine zumindest vorübergehende Adresse zugewiesen werden. Durch die Vergabe der Adresse gehört das Gerät nun nicht mehr zu den adresslosen Geräten, die sich an Antworten auf Suchbefehle beteiligen, und ignoriert fortan weitere Suchbefehle. Das Verfahren wird nun mit dem Beginn der Überprüfung fortgeführt.

In einer weiteren Ausgestaltung wird nicht nur zwischen mindestens einer Antwort und keiner Antwort unterschieden, sondern auch noch als dritter Zustand erkannt, wonach nur ein einziges Gerät geantwortet hat. Hierbei können die Geräte in dem Netzwerk durch eine Strommodulation antworten. Bei einer Kollision von Antworten kommt es zu einer Überlagerung der Ströme mehrerer Geräte. Mit einer Stromkomparatorschaltung im Kontrollelement kann erkannt werden, ob während der Antwort eine Schwelle zwischen dem Verbrauch eines einzelnen Geräts und von zwei Geräten überschritten wird. Wird eine Antwort ordnungsgemäß empfangen und die Stromkomparatorschaltung zeigt keinen überhöhten Stromverbrauch, ist davon auszugehen, dass nur einzelnes Gerät geantwortet hat.

In diesem Fall kann statt der Erhöhung des Werts k um eins dieser Wert k zwischengespeichert und gleich auf n gesetzt werden, wodurch zum Beginn der Überprüfung gesprungen werden kann. Es ist dann nämlich bekannt, dass es keine weiteren Geräte geben kann, die eine Seriennummer besitzen, die in den Bitpositionen 1 bis k identisch und in den Bitpositionen k+1 bis n verschieden ist. Nach Adressierung des gefundenen Geräts kann k, statt nur um eins erhöht zu werden, wieder gleich auf den gemerkten Wert k gesetzt werden. Die Suchmaske für die Bitposition n kann dabei zurückgesetzt werden. Dadurch kann das Verfahren erheblich verkürzt werden, da alle Zwischenbefehle eingespart werden.

In einer weiteren Ausgestaltung kann auch ein weiterer Befehl definiert werden, mit dem gleich die Empfangsbereitschaft für einen Befehl zu Adressierung bereitgestellt wird. Damit wird zum einen vermieden, dass bei der höchsten, n-ten Bitposition möglicherweise erst der falsche Bitwert eingestellt wird, sofern dieser zu diesem Zeitpunkt noch nicht bekannt ist. Zum anderen muss dann nicht extra die Suchmaske für die höchste Bitposition wieder freigegeben werden. Das wäre ansonsten notwendig, da alle verbleibenden Geräte auf die Suchbefehle für die erste Bitposition reagiert und ihre Suchmasken hierfür festgesetzt hätten.

Ergänzend kann auch eine Vorauswahl von zu bearbeitenden Bitpositionen durchgeführt werden. Diese Maßnahme bietet sich an, wenn zwei Bereiche der Bitpositionen mit stochastisch verteilten Bitwerten innerhalb der Seriennummer durch Sequenzen konstanter Bitwerte getrennt sind. Im Lauf der Suche würden diese konstanten Bitpositionen mehrfach mit immer dem gleichen Ergebnis bearbeitet werden, ohne einen neuen Erkenntnisgewinn zu bewirken. In einem Vorlauf kann durch einen linearen Lauf über alle Bitpositionen ermittelt werden, ob jede Bitposition bei Einzelbetrachtung in einer Suchanfrage nach beiden Bitwerten nur bei einem der beiden getesteten Bitwerte zu einer Antwort führt. In diesem Fall ist diese Bitposition konstant. Konstante Bitpositionen können übersprungen werden, wenn in der Ausführung eine Inkrementierung oder Dekrementierung von k ansteht. Alternativ hierzu ist die die Betrachtung von k als Index in einer sortierten Menge von eigentlichen physikalischen Bitpositionen. Falls insgesamt m Bitpositionen mit n variablen und c = m - n konstanten Bitpositionen zu überprüfen sind, wird ausgehend von den insgesamt m Bitpostionen eine neue verringerte Menge von variablen Bitpositionen der Anzahl n bereitgestellt, für die die Überprüfung durchgeführt wird.

Ein neues Gerät, das als Sensor, bspw. zur Detektion von Rauch und/oder Feuer, ausgebildet sein kann, kann bei laufendem Betrieb einer Anlage an das Netzwerk angeschlossen werden, wobei diesem neuen Gerät nur wenige Sekunden später eine Adresse zugewiesen werden kann. Somit können Geräte ohne großen Aufwand ausgetauscht werden. Falls gewünscht, können automatisch zugewiesene Adressen, bspw. über eine Netzschnittstelle, später geändert werden.

Nachfolgend werden einzelne Schritte einer möglichen Ausführungsform zum Finden eines einzelnen Geräts durch Vereinzelung beschrieben. Die gezeigte Kodierung der Befehle ist dabei arbiträr bzw. willkürlich und weist nach, dass die Befehle in der angegebenen Anzahl von Bytes kodiert werden können. Die Befehle umfassen jeweils drei Bytes, wobei das erste Byte eine Befehlskennung, das zweite Byte ein Parameter und das dritte Byte eine Checksumme ist, die sich auf die ersten beiden Bytes bezieht. Nicht immer werden alle Bits des Parameters bei der Überprüfung genutzt, wodurch sich weitere Funktionsmöglichkeiten ergeben. Wird die Übermittlung eines Befehls aufgrund einer Kommunikationsstörung bei einem Gerät gestört, bspw. verändert empfangen, so kann dieser verworfen werden.

Ein Zurücksetzen der Suchmaske für sämtliche Geräte wird mit der Abfrage <0x01><0xC0><CS> des Kontrollelements durchgeführt, ein Zurücksetzten einzelner Bitposition mit dem Befehl <0x01><0x80+Bitposition><CS>. Die Bitposition nimmt hier die Bits 0-5 des Parameters ein, Bit 6 und 7 sind fix. Dann wird mit der Abfrage <0x02><0xBF><CS> nach Geräten gesucht, deren k-te Bitposition der Seriennummer 0 ist. Die Bits 0 bis 5 des Parameters umfassen die Position, Bit 6 umfasst eine Information darüber, ob ein zu überprüfender Bitwert der Suchmaske auf 0 oder 1 gesetzt werden soll (hier 0), Bit 7 ist konstant 1.

Falls ein Gerät gefunden wird, antwortet dieses mit <0x00><0xFF>, ansonsten erfolgt keine Antwort und es wird überprüft, ob die k-te Bitposition der Seriennummer den Bitwert 1 aufweist. Die Bitpositionen werden so lange inkrementiert, bis die zuletzt zu überprüfende n-te Bitposition erreicht ist. Falls eine Antwort erhalten wird, wird die nächste k+1-te Bitposition überprüft.

Es ist vorgesehen, dass nach der letzten, n-ten Bitposition der Seriennummer zuletzt gesucht wird, da danach die Geräte für den Befehl 0x03, zum Setzen einer temporären Adresse, empfangsbereit sind. In der Regel muss es ein einzelnes aufzufindendes Gerät geben. Somit werden alle anderen zuvor überprüften Bitpositionen vorher verriegelt. Zur temporären bzw. vorübergehenden Zuweisung einer neuen Busadresse für ein bei einer Identifikationsrunde entdecktes Gerät stellt das Kontrollelement die Abfrage <0x03><0xFF><neue Busadresse><CS> bereit, worauf das Gerät mit <0xFF><neue Busadresse><CS> antwortet, was das Kontrollelement mit <0x04><CS> bestätigt. Das Kontrollelement hat somit erkannt, dass das Gerät die richtige Adresse empfangen hat und bestätigt, dass diese Adresse nun übernommen werden darf. Von da an hat das Gerät eine gültige Adresse und nimmt an weiteren beschriebenen Schritten zur Identifikation von Geräten nicht mehr teil, da Geräte mit einer gültigen Adresse die oben beschriebenen Suchbefehle ignorieren.

Nach Durchführung der Vereinzelung und somit Identifikation der Geräte sowie der Zuweisung der neuen Adressen kann das Kontrollelement weitere Befehle unter Nutzung der neuen Adressen an die Geräte versenden. Nach einem Abschalten einer Anlage, die die Geräte und das Kontrollelement umfasst, gehen jedoch die vorübergehenden Adressen verloren. Daher kann durch Adressierung über die temporäre Adresse in einem weiteren Schritt auch eine permanente Adresse zugeteilt werden, die in einem Permanentspeicher eines Geräts gesichert wird. In diesem Fall nimmt das Gerät nach dem Wiedereinschalten der Anlage automatisch wieder diese Adresse an und nimmt deshalb nicht mehr an einer weiteren automatischen Adressvergabe teil.

Die Reihenfolge der Bearbeitung der Bitpositionen ist für die Wirkungsweise des Verfahrens unerheblich. Es ist also möglich, die Abfolge der Bitpositionen in beliebiger Permutation zu bestimmen. In Ausgestaltung kann jedoch mit einer höchsten, bspw. 63. Bitposition begonnen werden, und unter Dekrementierung des Werts k abschließend eine letzte, nullte Bitposition überprüft werden.

Das Verfahren kann für eine Anlage durchgeführt werden, die ein Netzwerk mit dem üblicherweise zentralen Kontrollelement und räumlich verteilten Geräten, die miteinander verbunden sind, umfasst. Dabei kann die Anlage als Sicherheitsanlage, wie bspw. eine Brandmeldeanlage, für ein Gebäude vorgesehen sein. In diesem Fall ist das Kontrollelement als Bedien- oder Schaltzentrale ausgebildet. Die Geräte können als Sensoren, bspw. Videokameras, oder im Fall einer Brandmeldeanlage als Brandmelder ausgebildet sein. Unabhängig davon kann das Verfahren zur Suche nach Geräten und zur Zuweisung von Adressen an Geräte für verschiedene netzwerkartige Anlagen mit einem Kontrollelement, das eine Funktion eines Masters ausführt, und einer Anzahl Geräte, die Funktionen von Slaves ausführen, durchgeführt werden.

Ob bei einer Überprüfung ein Gerät oder mehrere Geräte antworten, ist für das Verfahren in einer möglichen Ausgestaltung unerheblich. Das Kontrollelement erkennt nur, dass mindestens ein Gerät antwortet. Es ist jedoch möglich, einen Antwortstrom zu messen, der z. B. 20 mA pro Gerät beträgt. Die Geräte können durch Überwachung der Spannung verhindern, dass zu viele Geräte auf einmal antworten, d. h. wenn 200 Geräte 20 mA ziehen wollten, könnte die Spannung zusammenbrechen, was einige Geräte dazu veranlasst, ihre Antwort sofort abzubrechen. Damit wird ein kompletter Zusammenbruch des Netzwerks vermieden. In Kombination bleibt ein messbarer Summenstrom übrig, an dem das Kontrollelement das Vorliegen von zumindest einer Antwort oder keiner Antwort erkennt.

In weiterer Ausgestaltung des Verfahrens kann ein zusätzlicher Befehl verwendet werden, mit dem nur einzelne Bits der Suchmaske zurückgesetzt werden. Somit ist es bspw. nicht erforderlich, die Suchmaske nach Vereinzelung eines Geräts komplett zurückzusetzen. Damit kann auf kürzestem Wege zu einer letzten Verzweigung, bei der eine üblicherweise zweite Abfrage übersprungen wurde, zurückgegangen werden. Dadurch werden viele Befehle, die Zeit kosten, eingespart. Die Überprüfung kann somit beschleunigt werden.

Durch Durchführen einer Strommessung, wodurch unterschieden werden kann, ob auf eine Abfrage ein Gerät oder mehrere Geräte geantwortet hat bzw. haben, kann die Überprüfung abgekürzt werden. Es müssen somit nicht alle Bits festgesetzt werden, wenn schon Eindeutigkeit erreicht ist.

Nachfolgende Tabelle 1 zeigt ein Beispiel für insgesamt fünf Geräte A, B, C, D, E, die jeweils eine Seriennummer mit drei Bitpositionen P aufweisen, die jeweils einen von zwei möglichen Bitwerten W 0 oder 1 umfassen. s

**Tabelle 1**

| | Bitposition P | | |
|---|---|---|---|
| | 1 | 2 | 3 |
| Gerät A | 0 | 1 | 1 |
| Gerät B | 1 | 0 | 1 |
| Gerät C | 1 | 1 | 1 |
| Gerät D | 1 | 0 | 0 |
| Gerät E | 1 | 1 | 0 |

Anhand dieses Beispiels werden zwei Ausführungsformen zur Durchführung einer Überprüfung der Bitwerte der Bitpositionen P zur Vereinzelung der Geräte A, B, C, D, E beschrieben. Bei beiden Ausführungsformen wird bei einer ersten Abfrage zum Überprüfen einer k-ten Bitposition P, mindestens ein an der ersten Abfrage teilnehmendes Gerät danach gefragt, ob dessen k-te Bitposition P den ersten Bitwert W = 0 aufweist. Sofern für die k-te Bitposition P eine zweite Abfrage durchgeführt wird, wird mindestens ein an der zweiten Abfrage teilnehmendes Gerät danach gefragt, ob dessen k-te Bitposition P den zweiten Bitwert W = 1 aufweist.

Bei der ersten Ausführungsform ist vorgesehen, dass durch ein Kontrollelement, das die Überprüfung durchführt, unterschieden werden kann, ob auf eine Abfrage für die k-te Bitposition kein Gerät oder mindestens ein Gerät antwortet. Die Überprüfung wird mit der ersten Abfrage für die erste Bitposition begonnen:
- erste Bitposition P = 1, erste Abfrage: W = 0, mindestens ein Gerät (A) antwortet, aufgebaute Seriennummer "0", die zweite Abfrage für W = 1 für die erste Bitposition P = 1 wird übersprungen, wobei diese zweite Abfrage für W = 1 für die erste Bitposition P = 1 auch die erstmals übersprungene Abfrage ist,
- zweite Bitposition P = 2, erste Abfrage: W = 0, kein Gerät antwortet,
- zweite Bitposition P = 2, zweite Abfrage: W = 1, mindestens ein Gerät (A) antwortet, aufgebaute Seriennummer "01",
- dritte Bitposition P = 3, erste Abfrage: W = 0, kein Gerät antwortet,
- dritte Bitposition P = 3, zweite Abfrage: W = 1, mindestens ein Gerät (A) antwortet, aufgebaute Seriennummer "011", Gerät A ist anhand der eindeutigen Seriennummer "011" identifiziert, wird nunmehr vereinzelt und nimmt an der weiteren Überprüfung nicht mehr teil, da nun die zuletzt zu überprüfende Bitposition erreicht ist, wird die Überprüfung mit der zweiten Abfrage für die dritte Bitposition P = 3 fortgesetzt, worauf jedoch kein Gerät antwortet, somit wird die Überprüfung nun an der zuletzt übersprungenen zweiten Abfrage für die erste Bitposition P = 1 fortgesetzt:
- erste Bitposition P = 1, zweite Abfrage: W = 1, mindestens ein Gerät (B, C, D, E) antwortet, aufgebaute Seriennummer "1",
- zweite Bitposition P = 2, erste Abfrage: W = 0, mindestens ein Gerät (B, D) antwortet, aufgebaute Seriennummer "10", die zweite Abfrage für die zweite Bitposition wird übersprungen,
- dritte Bitposition P = 3, erste Abfrage: W = 0, mindestens ein Gerät (D) antwortet, aufgebaute Seriennummer "100", Gerät D ist anhand der eindeutigen Seriennummer "100" identifiziert, wird vereinzelt und nimmt an der weiteren Überprüfung nicht mehr teil, da die zuletzt zu überprüfende Bitposition erreicht ist, wird die Überprüfung nun mit der zweiten Abfrage für die dritte Bitposition fortgesetzt:
- dritte Bitposition P = 3, zweite Abfrage: W = 1, mindestens ein Gerät (B) antwortet, aufgebaute Seriennummer "101", Gerät B ist anhand der eindeutigen Seriennummer "101" identifiziert, wird vereinzelt und nimmt an der weiteren Überprüfung nicht mehr teil, die Überprüfung wird nun an der zuletzt übersprungenen, zweiten Abfrage für die zweite Bitposition P = 2 fortgesetzt:
- zweite Bitposition P = 2, zweite Abfrage: W = 1, mindestens ein Gerät (C, E) antwortet, aufgebaute Seriennummer "11",
- dritte Bitposition P = 3, erste Abfrage: W = 0, mindestens ein Gerät (E) antwortet, aufgebaute Seriennummer "110", Gerät E ist anhand der eindeutigen Seriennummer "110" identifiziert, wird vereinzelt und nimmt an der weiteren Überprüfung nicht mehr teil, die Überprüfung wird mit der zweiten Abfrage für die dritte Bitposition fortgesetzt:
- dritte Bitposition P = 3, zweite Abfrage: W = 1, mindestens ein Gerät (C) antwortet, aufgebaute Seriennummer "111", Gerät C ist anhand der eindeutigen Seriennummer "111" identifiziert, wird vereinzelt und nimmt an der weiteren Überprüfung nicht mehr teil, die Überprüfung kann nun an der zuletzt übersprungenen zweiten Abfrage für die zweite Bitposition P = 2 fortgesetzt werden, wobei jedoch kein Gerät antwortet, weiterhin kann die zuvor zuletzt übersprungene zweite Abfrage für die erste Bitposition durchgeführt werden, worauf ebenfalls kein Gerät antwortet, da die zuvor zuletzt übersprungene zweite Abfrage für die erste Bitposition auch die erstmals übersprungene Abfrage ist, ist die Überprüfung nach der ersten Ausführungsform abgeschlossen.

Bei der zweiten Ausführungsform ist vorgesehen, dass durch ein Kontrollelement, das die Überprüfung durchführt, unterschieden werden kann, ob auf eine Abfrage für die k-te Bitposition kein Gerät, genau ein Gerät oder mindestens zwei Geräte antwortet bzw. antworten. Die Überprüfung wird mit der ersten Abfrage für die erste Bitposition begonnen:
- erste Bitposition P = 1, erste Abfrage: W = 0, genau ein Gerät (A) antwortet, aufgebaute Seriennummer "0", Gerät A ist nunmehr vereinzelt und nimmt an der weiteren Überprüfung nicht mehr teil, die Überprüfung wird mit der zweiten Abfrage für die erste Bitposition P = 1 fortgesetzt:
- erste Bitposition P = 1, zweite Abfrage: W = 1, mindestens zwei Geräte (B, C, D, E) antworten, aufgebaute Seriennummer "1",
- zweite Bitposition P = 2, erste Abfrage: W = 0, mindestens zwei Geräte (B, D) antworten, aufgebaute Seriennummer "10", die zweite Abfrage für die zweite Bitposition P = 2 wird übersprungen, zudem ist die zweite Abfrage für die zweite Bitposition P = 2 auch die erstmals übersprungene Abfrage
- dritte Bitposition P = 3, erste Abfrage: W = 0, ein Gerät (D) antwortet, aufgebaute Seriennummer "100", Gerät D ist nunmehr vereinzelt und nimmt an der weiteren Überprüfung nicht mehr teil, die Überprüfung wird mit der zweiten Abfrage für die dritte Bitposition P = 3 fortgesetzt:
- dritte Bitposition P = 3, zweite Abfrage: W = 1, genau ein Gerät (B) antwortet, aufgebaute Seriennummer "101", Gerät B ist nunmehr vereinzelt und nimmt an der weiteren Überprüfung nicht mehr teil, die Abfrage wird an der zuletzt übersprungenen, zweiten Abfrage für die zweite Bitposition P = 2 fortgesetzt:
- zweite Bitposition P = 2, zweite Abfrage W = 1, mindestens zwei Geräte (C, E) antworten, aufgebaute Seriennummer "11"
- dritte Bitposition P = 3, erste Abfrage W = 0, ein Gerät (E) antwortet, wird mit der aufgebauten Seriennummer "110" vereinzelt und nimmt an der weiteren Überprüfung nicht mehr teil, die Überprüfung wird mit der zweiten Abfrage für die dritte Bitposition P = 3 fortgesetzt:
- dritte Bitposition P = 3, zweite Abfrage W = 1, ein Gerät (C) antwortet und wird mit der Seriennummer "111" vereinzelt, die Überprüfung wird an der zuletzt übersprungenen zweiten Abfrage für die erste Bitposition, die zugleich die erstmals übersprungene Abfrage ist, fortgesetzt, worauf jedoch kein Gerät antwortet, somit ist die Überprüfung nach der zweiten Ausführungsform beendet.

Die Überprüfung kann unabhängig von einer konkreten Ausführungsform noch effizienter ausgeführt werden, wenn vor der eigentlichen Überprüfung untersucht wird, welche Bitpositionen für die Seriennummern sämtlicher Geräte konstant sind und demnach entweder nur den ersten oder nur den zweiten Bitwert aufweisen. Da derartige konstante Bitpositionen in der Regel nicht zur Unterscheidung der Seriennummern geeignet sind, können diese konstanten Bitpositionen bei der Überprüfung übersprungen werden.

Bei beiden beschriebenen Ausführungsformen wird die Überprüfung nach einem Zurücksetzen immer mit der zuletzt übersprungenen Abfrage und somit einer letzten Verzweigung fortgesetzt.

Mit dem Prinzip der Stromantwort kann auch berücksichtigt werden, dass das Netzwerk ggf. überlastet werden kann, wenn beliebig viele Geräte auf eine Abfrage gleichzeitig antworten. In Ausgestaltung können Geräte so konstruiert sein, dass sie bei einem Spannungsabfall, der Folge eines hohen Stromverbrauchs ist, ihre Antwort unterdrücken. Eine derartige Schaltung kann erst ab einem x-fachen Normalverbrauch reagieren. Somit kann möglicherweise bis n-1 Antworten auch die exakte Anzahl von Antworten an der Höhe des Stroms erkannt werden.

In weiterer Ausgestaltung kann die Antwort auf Suchanfragen auch so implementiert werden, dass für jedes Gerät ein Strom mit einer Höhe eingesetzt wird, der geringer als der sonst zur Kommunikation verwendete Antwortstrom ist, so dass für mehr Geräte eine gezielte Auswertung der Anzahl der antwortenden Geräte möglich ist, bevor die Schutzschaltungen ansprechen müssen.

Bei jeder Mehrfachantwort kann dann die Anzahl der gefundenen Geräte gemerkt werden. Somit kann bei der Überprüfung eine Baumsuche durchgeführt werden. Sind in einem Unterbaum vor einer Verzweigung bereits so viele Geräte gefunden, wie sich nach der Höhe des Stroms bei einer Antwort darunter befinden konnten, kann die Suche im ganzen Unterbaum abgebrochen werden.

Eine weitere Optimierungsmöglichkeit ist die Rücknahme der Suchmaske bis auf einen bestimmten Bitwert. Wo üblicherweise mehrere Befehle zum Zurücksetzen auf eine frühere Antwort notwendig sind, kann ein Befehl ausreichen.

Das erfindungsgemäße Kontrollelement ist dazu ausgebildet, sämtliche Schritte des vorgestellten Verfahrens durchzuführen. Dabei können einzelne Schritte dieses Verfahrens auch von einzelnen Komponenten des Kontrollelements durchgeführt werden. Weiterhin können Funktionen des Kontrollelements oder Funktionen von einzelnen Komponenten des Kontrollelements als Schritte des Verfahrens umgesetzt werden. Außerdem ist es möglich, dass Schritte der Verfahren als Funktionen wenigstens einer Komponente des Kontrollelements oder des gesamten Kontrollelements realisiert werden.

Weitere Vorteile und Ausgestaltungen der Erfindung ergeben sich aus der Beschreibung und den beiliegenden Zeichnungen.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Kurze Beschreibung der Zeichnung
- Figur 1: zeigt in schematischer Darstellung eine Ausführungsform des erfindungsgemäßen Kontrollelements für ein Beispiel eines Netzwerks zur Durchführung von Ausführungsformen des erfindungsgemäßen Verfahrens.
- Figur 2: zeigt ein Flussidagramm zu einer ersten Ausführungsform des erfindungsgemäßen Verfahrens.
- Figur 3: zeigt ein Flussidagramm zu einer zweiten Ausführungsform des erfindungsgemäßen Verfahrens.

### Ausführungsform der Erfindung

Die Erfindung ist anhand einer Ausführungsform in den Zeichnungen schematisch dargestellt und wird nachfolgend unter Bezugnahme auf die Zeichnungen ausführlich beschrieben.

Die Figuren werden zusammenhängend und übergreifend beschrieben, gleiche Bezugszeichen bezeichnen gleiche Komponenten.

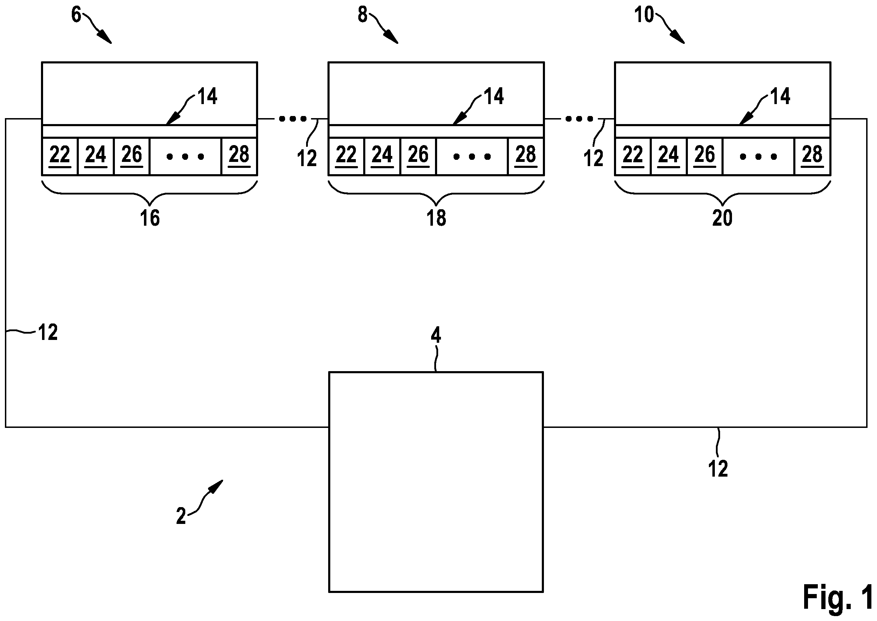

Figur 1 zeigt in schematischer Darstellung ein Netzwerk 2, das eine Ausführungsform eines erfindungsgemäßen Kontrollelements 4 umfasst. Weiterhin umfasst das Netzwerk 2 mehrere Geräte 6, 8, 10, wobei in Figur 1 lediglich drei derartige Geräte 6, 8, 10 dargestellt sind. Das Kontrollelement 4 ist hier über eine als Busleitung ausgebildete Verbindung 12 mit den Geräten 6, 8, 10 verbunden. Außerdem sind in dem hier dargestellten Beispiel des Netzwerks 2 auch die Geräte 6, 8, 10 über Verbindungen 12 miteinander verbunden.

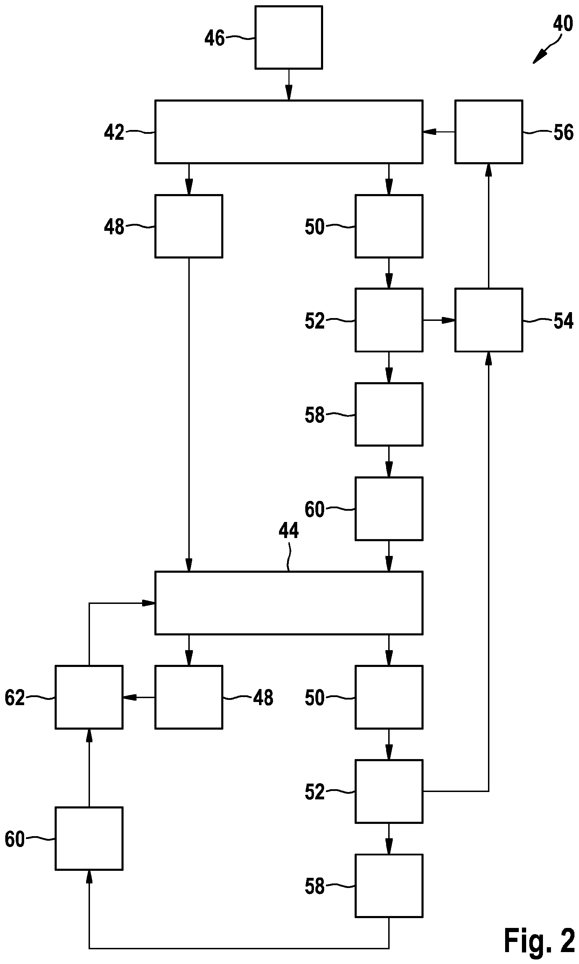

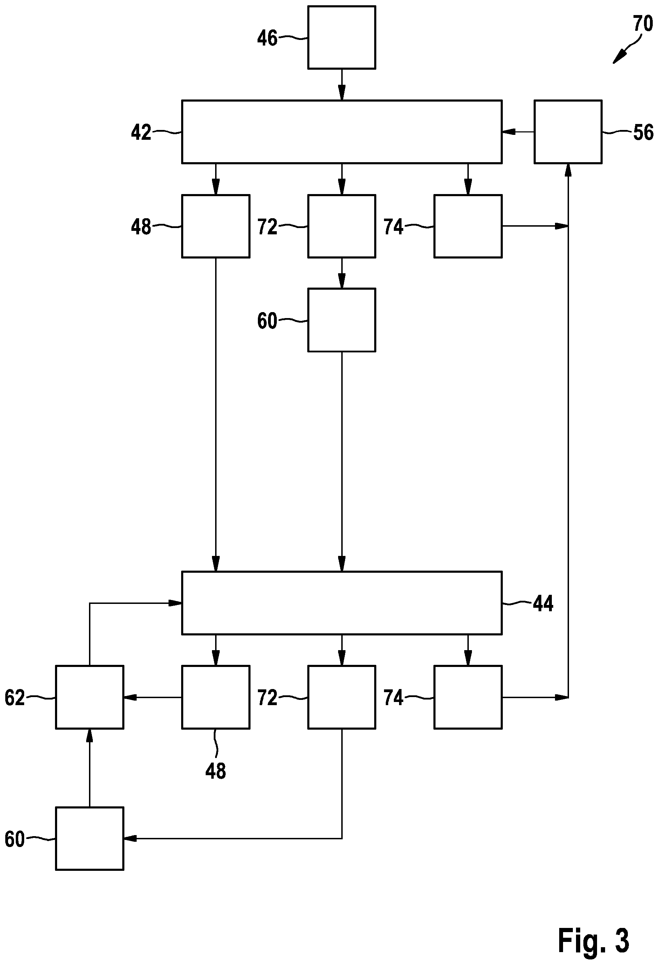

Das in Figur 1 beispielhaft dargestellte Netzwerk 2 kann schleifenförmig ausgebildet sein, wobei die Geräte 6, 8, 10 in Serie geschaltet sind. In diesem Fall kann das in Figur 1 dargestellte Netzwerk 2 auch als eine Schleife eines größeren, übergeordneten Netzwerks ausgebildet sein, wobei die Geräte 6, 8, 10 in der Schleife als eine Gruppe von Geräten 6, 8, 10 bezeichnet werden können. Die durch das Kontrollelement 4 durchführbaren Ausführungsformen des erfindungsgemäßen Verfahrens, die anhand der nachfolgenden Figuren 2 und 3 beschrieben werden, können jedoch auch für andersartige Konfigurationen von Netzwerken 2, bspw. für sternförmige Netzwerke, innerhalb denen Geräte 6, 8, 10 untereinander und/oder mit dem Kontrollelement 4 anders, als in Figur 1 explizit dargestellt, verbunden sind, durchgeführt werden.

Unabhängig von den hier beschriebenen Ausführungsformen des erfindungsgemäßen Verfahrens ist das üblicherweise zentrale Kontrollelement 4 zur Kontrolle und somit zur Steuerung und/oder Regelung von Funktionen der Geräte 6, 8, 10 innerhalb des Netzwerks 2 ausgebildet. Demnach ist dem Kontrollelement 4 innerhalb des Netzwerks 2 die Funktion des sogenannten Masters zugewiesen, wohingegen den Geräten 6, 8, 10 innerhalb des Netzwerks 2 Funktionen von sogenannten Slaves zugewiesen sind.

Es ist weiterhin vorgesehen, dass jedes der Geräte 6, 8, 10 einen Speicher 14 aufweist, in dem neben anderen Daten eine jeweilige Seriennummer 16, 18, 20 des Geräts 6, 8, 10 gespeichert ist. Dabei weist hier jede Seriennummer 16, 18, 20 von jedem Gerät 6, 8, 10 n Bitpositionen 22, 24, 26, 28 auf, wobei in Figur 1 von jeder Seriennummer 16, 18, 20 lediglich vier Bitpositionen 22, 24, 26, 28 dargestellt sind. Diesbezüglich zeigt Figur 1 im Detail jeweils eine zuerst zu überprüfende erste Bitposition 22, eine zweite Bitposition 24, eine dritte Bitposition 26 sowie eine zuletzt zu überprüfende n-te Bitposition 28.

Das in Figur 2 dargestellte Flussdiagramm zu einer ersten Ausführungsform des erfindungsgemäßen Verfahrens umfasst einen Algorithmus zur Durchführung einer Überprüfung 40, mit der Geräte 6, 8, 10 des Netzwerks 2 vereinzelt werden können. Bei dieser ersten Ausführungsform des erfindungsgemäßen Verfahrens ist vorgesehen, dass das Kontrollelement 4 unterscheiden kann, ob auf eine von ihm durchgeführte Abfrage 42, 44 entweder kein Gerät 6, 8, 10 oder mindestens ein Gerät 6, 8, 10 antwortet.

Zu Beginn des Verfahrens 46 werden eine Reihenfolge, nach der die Bitpositionen 22, 24, 26, 28 abgefragt werden sowie ein Zähler mit dem Wert k festgelegt. Die Überprüfung 40 beginnt mit einer ersten Abfrage 42 nach einem ersten von zwei möglichen Bitwerten für die hier zuerst zu überprüfende erste Bitposition 22. Im weiteren Fortgang der Überprüfung 40 wird für jede Bitposition 22, 24, 26, 28 zumindest einmal die erste Abfrage 42 nach dem ersten Bitwert durchgeführt.

Nachdem das Kontrollelement 4 bei der ersten Abfrage 42 für eine k-te Bitposition 22, 24, 26, 28 durchgeführt hat, wird überprüft, wie viele Geräte 6, 8, 10 auf diese erste Abfrage 42 geantwortet haben. Falls auf die erste Abfrage 42 kein Gerät antwortet (Nichtantwort 48), wird die Überprüfung 40 für die k-te Bitposition 22, 24, 26, 28 mit einer zweiten Abfrage 44 nach dem zweiten von zwei möglichen Bitwerten fortgesetzt.

Falls auf die erste Abfrage 42 mindestens ein Gerät 6, 8, 10 antwortet und somit eine Mehrfachantwort 50 vorliegt, wird zunächst eine Prüfung 52 des Werts k des Zählers durchgeführt. Falls Bedingung 54: k<n vorliegt und somit die zuletzt zu überprüfende, n-te Bitposition 28 noch nicht erreicht wurde, wird eine Erhöhung 56 des Werts k des Zählers um 1 durchgeführt und für die k+1-te Bitposition die erste Abfrage 42 nach dem ersten möglichen Bitwert durchgeführt. Somit wird für den Fall, dass sich bei der Prüfung 52 des Werts des Zählers ergibt, dass k<n (Bedingung 54) ist, für die k-te Bitposition 22, 24, 26, 28 die zweite Abfrage 44 nach dem zweiten Bitwert übersprungen.

Falls sich bei der Prüfung 52 des Werts des Zählers herausstellt, dass Bedingung 58: k=n gegeben ist, ist klar, dass auf die Mehrfachantwort 50 genau ein Gerät 6, 8, 10 geantwortet hat, für das nunmehr eine Vereinzelung 60 durchgeführt wird, so dass dieses Gerät 6, 8, 10 im weiteren Fortgang der Überprüfung 40 an keiner weiteren Abfrage 42, 44 mehr teilnimmt. Nach Vereinzelung 60 dieses Geräts 6, 8, 10 wird für die zuletzt zu überprüfende n-te Bitposition 28 die zweite Abfrage durchgeführt. Bei Durchführung der zweiten Abfrage 44 für die k-te Bitposition wird ebenfalls überprüft, ob eine Nichtantwort 48 oder eine Mehrfachantwort 50 vorliegt.

Bei Vorliegen der Nichtantwort 48 auf die zweite Abfrage 44, wird ein Zurücksetzen 62 durchgeführt, was bedeutet, dass die Überprüfung 40 bei einer zuletzt übersprungenen zweiten Abfrage 44 für eine vorhergehende Bitposition 16, 18, 20 durchgeführt und der Wert k des Zählers entsprechend zurückgesetzt wird. Diesbezüglich wird während der Überprüfung 40 gespeichert, nach welcher Mehrfachantwort 50 auf die erste Abfrage 42 bei einer k-ten Bitposition 22, 24, 26, 28, falls Bedingung 58: k=n vorliegt, die zweite Abfrage 44 übersprungen wurde. Hierbei wird auch eine Reihenfolge gespeichert, nach der mehrere zweite Abfragen 44 für unterschiedliche Bitpositionen 22, 24, 26, 28 nacheinander übersprungen wurden. Somit kann sich bei einer möglichen Ausführung der Überprüfung 40 ergeben, dass nach einem Zurücksetzen 62 nach einer Nichtantwort 48 auf eine zweite Abfrage 44 bei Durchführung der zuletzt übersprungenen zweiten Abfrage 44 erneut eine Nichtantwort 48 folgt. In diesem Fall wird erneut ein Zurücksetzen 62 auf die davor zuletzt übersprungene zweite Abfrage 44 durchgeführt usw.

Falls auf die zweite Abfrage 44 nach dem zweiten Bitwert für die k-te Bitposition 22, 24, 26, 28 eine Mehrfachantwort 50 folgt, wird eine Prüfung 52 des Werts k des Zählers durchgeführt. Falls sich hierbei ergibt, dass k<n und somit Bedingung 54 gegeben ist, wird der Wert k des Zählers ebenfalls bei einer Erhöhung 56 um 1 dekrementiert und nachfolgend für die k+1-te Bitposition 22, 24, 26, 28 die erste Abfrage 42 durchgeführt. Falls sich bei der Prüfung 52 des Werts k des Zählers herausstellt, dass k=n (Bedingung 58) ist, hat auf die Mehrfachantwort 50 bei der zweiten Abfrage 44 für die zuletzt zu überprüfende n-te Bitposition 28 genau ein Gerät 6, 8, 10 geantwortet, für das eine Vereinzelung 60 durchgeführt wird, so dass dieses nunmehr vereinzelte Gerät 6, 8, 10 bei keiner weiteren Abfrage 42, 44 der Überprüfung 40 mehr teilnimmt. In diesem Fall wird ebenfalls ein Zurücksetzen 62 auf die zuletzt übersprungene zweite Abfrage 44 für eine voranstehende Bitposition 22, 24, 26, 28 durchgeführt. Die Überprüfung 40 wird jedoch beendet, nachdem nach mindestens einem Zurücksetzten 62 auf eine zuvor zuletzt übersprungene, zweite Abfrage 44 entweder die erstmals übersprungene zweite Abfrage 44 und/oder die zweite Abfrage 44 für die zuerst zu überprüfende Bitposition 22 erreicht ist.

Bei der zweiten Ausführungsform des erfindungsgemäßen Verfahrens wird eine zweite Ausführungsform einer Überprüfung durchgeführt, wobei ein Algorithmus hierfür in dem Flussdiagramm aus Figur 3 dargestellt ist. Schritte der zweiten Ausführungsform der Überprüfung 70, die mit Schritten der ersten Ausführungsform der Überprüfung 40 identisch sind, weisen in dem Flussdiagramm beider Figuren 2, 3 dieselben Bezugszeichen auf.

Bei dieser zweiten Ausführungsform des erfindungsgemäßen Verfahrens kann das Kontrollelement 4 nunmehr unterscheiden, ob auf eine Abfrage 42 kein Gerät 6, 8, 10 antwortet und somit eine Nichtantwort 48 vorliegt, ob auf eine Abfrage 42, 44 genau ein Gerät 6, 8, 10 antwortet und somit eine Einfachantwort 72 vorliegt, oder ob auf eine Abfrage 42, 44 mindestens zwei Geräte 6, 8, 10 antworten und somit eine Mehrfachantwort 74 vorliegt.

Zu Beginn 46 dieser Überprüfung 70 wird eine Reihenfolge, nach der die Bitpositionen 22, 24, 26, 28 überprüft werden, festgelegt sowie ein Zähler mit einem Wert k eingerichtet. Danach wird für die zuerst zu überprüfende Bitposition 22 die erste Abfrage 42 nach dem ersten Bitwert durchgeführt. Im weiteren Fortgang der Überprüfung kann für jede Bitposition 22, 24, 26, 28 zumindest einmal die erste Abfrage 42 durchgeführt werden.

Falls auf die erste Abfrage 42 für die k-te Bitposition 22, 24, 26, 28 kein Gerät 6, 8, 10 antwortet (Nichtantwort 48), wird für diese k-te Bitposition 22, 24, 26, 28 die zweite Abfrage 44 nach dem zweiten Bitwert durchgeführt. Falls auf die erste Abfrage 42 für die k-te Bitposition 22, 24, 26, 28 genau ein Gerät 6, 8, 10 antwortet und somit eine Einfachantwort 72 vorliegt, wird für dieses antwortende Gerät 6, 8, 10 eine Vereinzelung 60 durchgeführt, so dass dieses nunmehr vereinzelte Gerät 6, 8, 10 an keiner weiteren Abfrage 42, 44 der Überprüfung 70 teilnimmt. Nach der Vereinzelung 60 dieses Geräts 6, 8, 10 nach der ersten Abfrage 42 wird für die k-te Bitposition 22, 24, 26, 28 die zweite Abfrage 44 durchgeführt. Falls auf die erste Abfrage 44 der k-ten Bitposition 22, 24, 26, 28 mindestens zwei Geräte 6, 8, 10 antworten und somit eine Mehrfachantwort 74 vorliegt, wird der Wert k des Zählers um 1 erhöht und nach einer somit durchgeführten Erhöhung 56 für eine nachfolgende k+1-te Bitposition 22, 24, 26, 28 die erste Abfrage 42 durchgeführt. Somit ist vorgesehen, dass nach Vorliegen einer Mehrfachantwort 44 auf die erste Abfrage 42 nach dem ersten Bitwert für die k-te Bitposition 22, 24, 26, 28 für diese k-te Bitposition 22, 24, 26, 28 die zweite Abfrage 44 nach dem zweiten Bitwert übersprungen wird. Im Laufe der Überprüfung 70 kann dies mehrmals hintereinander geschehen. Dabei wird eine Reihenfolge, nach der zweite Abfragen 44 nacheinander übersprungen werden, gespeichert.

Bei Durchführung der zweiten Abfrage 44 nach dem zweiten Bitwert bei der k-ten Bitposition 22, 24, 26, 28 wird überprüft, ob eine Nichtantwort 48, eine Einfachantwort 72 oder eine Mehrfachantwort 74 vorliegt. Falls auf die zweite Abfrage 44 kein Gerät 6, 8, 10 antwortet (Nichtantwort 48), wird ein Zurücksetzen 62 durchgeführt und die Überprüfung 70 bei der zuletzt übersprungenen zweiten Abfrage 44 bei einer Bitposition 22, 24, 26, 28 fortgesetzt und der Wert k des Zählers zurückgesetzt.

Falls auf die zweite Abfrage 44 für die k-te Bitposition 22, 24, 26, 28 genau ein Gerät 6, 8, 10 antwortet und demnach eine Einfachantwort 72 vorliegt, wird dieses Gerät 6, 8, 10 im Rahmen einer Vereinzelung 60 vereinzelt und nimmt somit an keiner weiteren Abfrage 42, 44 der weiteren Überprüfung 70 teil. Nach der Vereinzelung 60 dieses Geräts 6, 8, 10 wird zudem ein Zurücksetzen 62 durchgeführt, wobei die Überprüfung 70 bei der zuletzt übersprungenen zweiten Abfrage 44 fortgesetzt wird.

Falls auf die zweite Abfrage bei der k-ten Bitposition mehrere Geräte 6, 8, 10 antworten und somit eine Mehrfachantwort 74 vorliegt, wird das Verfahren nach Erhöhung 56 des Werts k des Zählers bei der k+1-ten Bitposition 22, 24, 26, 28 mit der ersten Abfrage 42 fortgesetzt.

Ebenso wie bei der ersten Ausführungsform der Überprüfung 40 ist auch bei der zweiten Ausführungsform der Überprüfung 70 vorgesehen, dass bei mehrfach nacheinander durchzuführendem Zurücksetzen 62 auf übersprungene zweite Abfragen 44 eine Reihenfolge, nach der zweite Abfragen 44 nacheinander übersprungen wurden, rückwärts zurückverfolgt wird. Die anhand des Flussdiagramms aus Figur 3 beschriebene Überprüfung 70 ist dann beendet, nachdem bei einem Zurücksetzen 42 für die zuerst zu überprüfende Bitposition 22 die zweite Abfrage 44 erreicht ist und/oder nachdem die im Laufe der Überprüfung 70 erstmals übersprungene zweite Abfrage 44 erreicht ist.

Bei beiden beschriebenen Ausführungsformen des erfindungsgemäßen Verfahrens wird bei den durchzuführenden Überprüfungen 40, 70 überprüft, wie viele Geräte 6, 8, 10 auf die vorgesehenen Abfragen 42, 44 antworten. Je nach Anzahl der Antworten wird die Überprüfung 40, 70 fortgesetzt.

So wird in Abhängigkeit davon, wie viele Geräte 6, 8, 10 auf die erste Abfrage 42 antworten, entschieden, ob die Überprüfung 40, 70 mit der zweiten Abfrage 44 für die k-te Bitposition 22, 24, 26, 28 fortgesetzt wird, oder ob die zweite Abfrage 44 für die k-te Bitposition 22, 24, 26, 28 übersprungen und die Überprüfung 40, 70 mit der ersten Abfrage 44 für eine k+1-te Bitposition 22, 24, 26, 28 fortgesetzt wird. Die Überprüfung 40, 70 wird, nachdem ein Gerät 6, 8, 10 bei einer zweiten Abfrage 44 vereinzelt wurde, bei einer zuletzt übersprungenen zweiten Abfrage fortgesetzt, wobei diese zuletzt übersprungene zweite Abfrage 44 durchgeführt und somit nachgeholt wird. Weshalb diese zweite Abfrage nunmehr als nichtübersprungen definiert werden kann. Es ist in der Regel möglich, dass diese zweite Abfrage 44 für eine entsprechende k-te Bitposition 22, 24, 26, 28 im Laufe einer Überprüfung 40, 70 übersprungen und nach einem Zurücksetzen 62 nachgeholt wird. Weiterhin kann vorgesehen sein, dass diese zweite Abfrage 44 für die k-te Bitposition 22, 24, 26, 28 nach einer Erhöhung 56 des Werts k des Zählers erneut übersprungen und nach einem weiteren Zurücksetzen 62 erneut nachgeholt wird.

Üblicherweise wird bei den Überprüfungen 40, 70 nach verschiedenen Fällen unterschieden:
- falls auf die erste Abfrage 42 kein Gerät 6, 8, 10 oder genau ein Gerät 6, 8, 10 antwortet, wird die Überprüfung 40, 70 für die k-te Bitposition 22, 24, 26, 28 mit der zweiten Abfrage 44 fortgesetzt,
- falls auf die erste Abfrage 42 mindestens zwei Geräte 6, 8, 10 antworten, wird die zweite Abfrage 44 für die k-te Bitposition 22, 24, 26, 28 übersprungen und die Überprüfung 40, 70 für die k+1-te Bitposition 22, 24, 26, 28 mit der ersten Abfrage 42 fortgesetzt,
- falls auf die zweite Abfrage 44 kein Gerät 6, 8, 10 antwortet, wird die Überprüfung 40, 70 bei einer zuletzt übersprungenen zweiten Abfrage 44 fortgesetzt,
- falls auf die zweite Abfrage 42 genau ein Gerät 6, 8, 10 antwortet, wird die Überprüfung 40, 70 bei einer zuletzt übersprungenen zweiten Abfrage 44 fortgesetzt,
- falls auf die zweite Abfrage 44 mindestens zwei Geräte 6, 8, 10 antworten, wird die Überprüfung 40, 70 für die k+1-te Bitposition 22, 24, 26, 28 mit der ersten Abfrage 42 fortgesetzt.

Dabei wird unterschieden, ob auf eine Abfrage 42, 44 kein Gerät 6, 8, 10 oder mindestens ein Gerät 6, 8, 10 antwortet, wobei für den Fall, dass auf die erste Abfrage 42 mindestens ein Gerät 6, 8, 10 antwortet, für die k-te Bitposition 22, 24, 26, 28 die zweite Abfrage 44 nach dem zweiten Bitwert übersprungen und die Überprüfung 40 bei einer nachfolgenden, k+1-ten Bitposition 22, 24, 26, 28 mit einer ersten Abfrage 42 nach dem ersten Bitwert fortgesetzt wird.

Alternativ kann unterschieden werden, ob auf eine Abfrage 42, 44 kein Gerät 6, 8, 10, genau ein Gerät 6, 8, 10 oder mindestens zwei Geräte 6, 8, 10 antwortet bzw. antworten, wobei für den Fall, dass auf eine Abfrage 42, 44 genau ein Gerät 6, 8, 10 antwortet, dieses eine Gerät 6, 8, 10 vereinzelt wird.

Falls bei der zweiten Ausführungsform der Überprüfung 70 bei der k-ten Bitposition 22, 24, 26, 28 auf die erste Abfrage 42 kein Gerät 6, 8, 10 oder genau ein Gerät 6, 8, 10 antwortet, wird die Überprüfung 70 bei der k-ten Bitposition 22, 24, 26, 28 mit der zweiten Abfrage 44 nach dem zweiten Bitwert fortgesetzt. Falls auf die erste Abfrage 42 mindestens zwei Geräte 6, 8, 10 antworten, wird die zweite Abfrage 44 nach dem zweiten Bitwert übersprungen und die Überprüfung 70 bei der nachfolgenden, k+1-ten Bitposition 22, 24, 26, 28 mit der ersten Abfrage 42 nach dem ersten Bitwert fortgesetzt. Bei der zweiten Abfrage 44 für die k-te Bitposition 22, 24, 26, 28 wird überprüft, wieviel daran teilnehmende Geräte 6, 8, 10 den zweiten Bitwert aufweisen, wobei für den Fall, dass auf die zweite Abfrage 44 kein Gerät 6, 8, 10 oder ein Gerät 6, 8, 10 antwortet, die Überprüfung 70 mit der zuletzt übersprungenen zweiten Abfrage 44 fortgesetzt wird, und wobei für den Fall, dass auf die zweite Abfrage 44 mindestens zwei Geräte 6, 8, 10 antworten, die Überprüfung 70 bei der nachfolgenden, k+1-ten Bitposition 22, 24, 26, 28 mit der ersten Abfrage 42 nach dem ersten Bitwert fortgesetzt wird.

In beiden Ausführungsformen ist für den Fall, dass die k-t Bitposition 22, 24, 26, 28 zugleich die zuletzt zu überprüfende Bitposition 28 ist, vorgesehen, dass nach der ersten Abfrage 42 für die zuletzt zu überprüfende Bitposition 22, 24, 26, 28 unabhängig davon, wie viele Geräte 6, 8, 10 antworten, auch die zweite Abfrage 44 für die zuletzt zu überprüfende Bitposition 22, 24, 26, 28 durchgeführt und die Überprüfung 40, 70 danach bei der zuletzt übersprungenen zweiten Abfrage 44 durchgeführt wird. Mindestens ein Gerät 6, 8, 10, das bei einer zuletzt zu überprüfenden Bitposition 28 auf eine Abfrage 42, 44 antwortet, wird vereinzelt.

Die Überprüfung 40, 70 wird beendet, falls die Überprüfung 40, 70 nach dem Zurücksetzen 62 auf die erstmals übersprungene zweite Abfrage 44 bei einer k-ten Bitposition 22, 24, 26, 28 und/oder bei der zuerst zu überprüfenden Bitposition 22, 24, 26, 28 fortgesetzt wurde. Dabei wird die Überprüfung 40, 70 beendet, wenn für diese zweite Abfrage 44, die die erstmals übersprungene zweite Abfrage 44 und/oder die zweite Abfrage 44 für die erste Bitposition 22, 24 26, 28 ist, als Ergebnis, eine Nichtantwort 48, eine Einfachantwort 72 oder eine eindeutige Mehrfachantwort 50 bereitgestellt und ggf. ein letztes Gerät 6, 8, 10 vereinzelt wird.

Ein im Verlauf der Überprüfung 40, 70 vereinzeltes Gerät 6, 8, 10 wird aus der Menge der zu vereinzelnden Geräte 6, 8, 10 entfernt und nimmt demnach im weiteren Verlauf der Überprüfung 40, 70 an keiner weiteren Abfrage 42, 44 nach einem Bitwert für eine k-te Bitposition 22, 24, 26, 28 teil.

Bei den Überprüfungen 40, 70 kann eine bei den Abfragen 42, 44 bis zu einer Vereinzelung 62 eines Geräts 6, 8, 10 bislang aufgebaute Seriennummer 16, 18, 20 gemerkt und dieses Gerät 6, 8, 10 anhand der bislang aufgebauten Seriennummer 16, 18, 20 identifiziert werden, wobei für eine derart aufgebaute Seriennummer 16, 18, 20 nicht notwendigerweise sämtliche n Bitpositionen 22, 24, 26, 28 bekannt sein müssen.

Jedem Gerät 6, 8, 10, das bei der Überprüfung 40, 70 identifiziert wird, kann eine Adresse, die innerhalb des Netzwerks 2 gültig ist, zugewiesen werden.

In einer Vorauswahl können die Bitpositionen 22, 24, 26, 28 ermittelt werden, die über die Seriennummern 16, 18, 20 aller Geräte 6, 8, 10 konstant sind und dann bei der Überprüfung 40, 70 übersprungen werden. Dabei wird ermittelt, welche n von insgesamt m Bitpositionen 22, 24, 26, 28 der Seriennummern 16, 18, 20 der Geräte 6, 8, 10 überprüft werden, wobei ermittelt wird, welche c Bitpositionen 22, 24, 26, 28 für sämtliche Geräte 6, 8, 10 gleiche Bitwerte aufweisen, wobei bei der Überprüfung 40, 70 nur jene n = m - c Bitpositionen 22, 24, 26, 28 überprüft werden, die für sämtliche Geräte 6, 8, 10 unterschiedliche Bitwerte aufweisen.

Außerdem kann durch Messung der Stärke von überlagerten Antworten die Zahl der antwortenden Geräte 6, 8, 10 ermittelt und dieses Wissen genutzt werden, um die Suche in zumindest einem Unterbaum abzukürzen.

## Patentansprüche

1. Verfahren zum Betreiben eines Netzwerks (2), das mehrere Geräte (6, 8, 10) aufweist, wobei vorgesehen ist, dass jedem Gerät (6, 8, 10) des Netzwerks (2) eine Seriennummer (16, 18, 20), die mehrere Bitpositionen (22, 24, 26, 28) umfasst, zugeordnet ist, wobei jede Bitposition (22, 24, 26, 28) einen von zwei möglichen Bitwerten aufweist, wobei die Geräte (6, 8, 10) bei einer Überprüfung (40, 70) anhand ihrer Seriennummern (16, 18, 20) vereinzelt werden, bei dem eine Reihenfolge, nach der die Bitpositionen (22, 24, 26, 28) überprüft werden, sowie ein Zähler mit einem Wert k festgelegt werden, wobei die Überprüfung (40, 70) bei der zuerst zu überprüfenden Bitposition (22, 24, 26, 28) begonnen wird,
- bei dem für eine k-te Bitposition (22, 24, 26, 28) bei einer ersten Abfrage (42), mindestens ein teilnehmendes Geräte (6, 8, 10) gefragt wird, ob dessen k-te Bitposition (22, 24, 26, 28) den ersten Bitwert von zwei möglichen Bitwerten aufweist, und bei dem für die k-te Bitposition (22, 24, 26, 28) bei einer zweiten Abfrage (44), mindestens ein teilnehmendes Geräte (6, 8, 10) gefragt wird, ob dessen k-te Bitposition (22, 24, 26, 28) den zweiten Bitwert von zwei möglichen Bitwerten aufweist,
- wobei in Abhängigkeit davon, wie viele Geräte (6, 8, 10) auf die erste Abfrage (42) antworten, entschieden wird, ob die Überprüfung (40, 70) mit einer zweiten Abfrage (44) für die k-te Bitposition fortgesetzt wird, oder ob die zweite Abfrage (44) für die k-te Bitposition übersprungen und die Überprüfung (40, 70) mit der ersten Abfrage (42) für eine k+1-te Bitposition fortgesetzt wird,
wobei die Überprüfung (40, 70), nach dem ein Gerät (6, 8, 10) bei einer zweiten Abfrage (44) vereinzelt wurde, bei einer zuletzt übersprungenen zweiten Abfrage (44) fortgesetzt wird,
wobei in einer Vorauswahl die Bitpositionen (22, 24, 26, 28) ermittelt werden, die über die Seriennummern (16, 18, 20) aller Geräte (6, 8, 10) konstant sind und dann bei der Überprüfung (40, 70) übersprungen werden, und
durch Durchführung einer Strommessung unterschieden wird, ob auf eine Abfrage (42, 44) kein Gerät (6, 8, 10), genau ein Gerät (6, 8, 10) oder mindestens zwei Geräte (6, 8, 10) antwortet bzw. antworten,
wobei für den Fall, dass auf die erste Abfrage (42) genau ein Gerät (6, 8, 10) antwortet, wird für dieses antwortende Gerät (6, 8, 10) eine Vereinzelung durchgeführt, so dass dieses nunmehr vereinzelte Gerät (6, 8, 10) an keiner weiteren Abfrage (42, 44) der Überprüfung (40, 70) teilnimmt,
wobei falls auf die erste Abfrage (42) für die k-te Bitposition (22, 24, 26, 28) kein Gerät (6, 8, 10) antwortet, wird für diese k-te Bitposition (22, 24, 26, 28) die zweite Abfrage (44) nach dem zweiten Bitwert durchgeführt,
wobei falls auf die erste Abfrage (42) der k-ten Bitposition (22, 24, 26, 28) mindestens zwei Geräte (6, 8, 10) antworten, wird der Wert k des Zählers um 1 erhöht und für eine nachfolgende k+1-te Bitposition (22, 24, 26, 28) die erste Abfrage (42) durchgeführt,
wobei den Fall, dass die k-te Bitposition (22, 24, 26, 28) zugleich eine zuletzt zu überprüfende Bitposition (28) ist, nach der ersten Abfrage (42) für die zuletzt zu überprüfende Bitposition (22, 24, 26, 28) unabhängig davon, wie viele Geräte (6, 8, 10) antworten, auch die zweite Abfrage (44) für die zuletzt zu überprüfende Bitposition (22, 24, 26, 28) durchgeführt und die Überprüfung (40, 70) danach bei der zuletzt übersprungenen zweiten Abfrage (44) durchgeführt wird.

2. Verfahren nach Anspruch 1, bei dem nach verschiedenen Fällen unterschieden wird,
- wobei für den Fall, dass auf die erste Abfrage (42) kein Gerät (6, 8, 10) oder genau ein Gerät (6, 8, 10) antwortet, die Überprüfung (40, 70) für die k-te Bitposition (22, 24, 26, 28) mit der zweiten Abfrage (44) fortgesetzt wird,
- wobei für den Fall, dass auf die erste Abfrage (42) mindestens zwei Geräte (6, 8, 10) antworten, die zweite Abfrage (44) für die k-te Bitposition (22, 24, 26, 28) übersprungen und die Überprüfung (40, 70) für die k+1-te Bitposition (22, 24, 26, 28) mit der ersten Abfrage (42) fortgesetzt wird,
- wobei für den Fall, dass auf die zweite Abfrage (44) kein Gerät (6, 8, 10) antwortet, die Überprüfung (40, 70) bei einer zuletzt übersprungenen zweiten Abfrage (44) fortgesetzt wird,
- wobei für den Fall, dass auf die zweite Abfrage (44) genau ein Gerät (6, 8, 10), antwortet, die Überprüfung (40, 70) bei einer zuletzt übersprungenen zweiten Abfrage (44) fortgesetzt wird,
- wobei für den Fall, dass auf die zweite Abfrage (44) mindestens zwei Geräte (6, 8, 10) antworten, die Überprüfung für die k+1-te Bitposition (22, 24, 26, 28) mit der ersten Abfrage (42) fortgesetzt wird.

3. Verfahren nach Anspruch 1 oder 2, bei dem vorgesehen ist, dass unterschieden wird, ob auf eine Abfrage (42, 44) kein Gerät (6, 8, 10) oder mindestens ein Gerät (6, 8, 10) antwortet, wobei für den Fall, dass auf die erste Abfrage (42) mindestens ein Gerät (6, 8, 10) antwortet, für die k-te Bitposition (22, 24, 26, 28) die zweite Abfrage (44) nach dem zweiten Bitwert übersprungen und die Überprüfung (40, 70) bei einer nachfolgenden, k+1-ten Bitposition (22, 24, 26, 28) mit einer ersten Abfrage (42) nach dem ersten Bitwert fortgesetzt wird.

4. Verfahren nach Anspruch 1, bei dem für den Fall, dass bei der k-ten Bitposition (22, 24, 26, 28) auf die erste Abfrage (42) kein Gerät (6, 8, 10) oder genau ein Gerät (6, 8, 10) antwortet, die Überprüfung (70) bei der k-ten Bitposition (22, 24, 26, 28) mit der zweiten Abfrage (44) nach dem zweiten Bitwert fortgesetzt wird, und bei dem für den Fall, dass auf die erste Abfrage (42) mindestens zwei Geräte (6, 8, 10) antworten, die zweite Abfrage (44) nach dem zweiten Bitwert übersprungen und die Überprüfung (40, 70) bei der nachfolgenden, k+1-ten Bitposition (22, 24, 26, 28) mit der ersten Abfrage (42) nach dem ersten Bitwert fortgesetzt wird, wobei bei der zweiten Abfrage (44) für die k-te Bitposition (22, 24, 26, 28) überprüft wird, wieviel daran teilnehmende Geräte (6, 8, 10) den zweiten Bitwert aufweisen, wobei für den Fall, dass auf die zweite Abfrage (44) kein Gerät (6, 8, 10) oder ein Gerät (6, 8, 10) antwortet, die Überprüfung (70) mit der zuletzt übersprungenen zweiten Abfrage (44) fortgesetzt wird, und wobei für den Fall, dass auf die zweite Abfrage (44) mindestens zwei Geräte (6, 8, 10) antworten, die Überprüfung (70) bei der nachfolgenden, k+1-ten Bitposition (22, 24, 26, 28) mit der ersten Abfrage (42) nach dem ersten Bitwert fortgesetzt wird.

5. Verfahren nach einem der voranstehenden Ansprüche, bei dem mindestens ein Gerät (6, 8, 10), das bei einer zuletzt zu überprüfenden Bitposition (22, 24, 26, 28) auf eine Abfrage (42, 44) antwortet, vereinzelt wird.

6. Verfahren nach einem der voranstehenden Ansprüche, bei dem die Überprüfung (40, 70) beendet wird, falls die Überprüfung (40, 70) nach einem Zurücksetzen (62) auf die erstmals übersprungene Abfrage (44) bei einer k-ten Bitposition (22, 24, 26, 28) und/oder bei der zuerst zu überprüfenden Bitposition (22, 24, 26, 28) mit dieser übersprungenen Abfrage (44) fortgesetzt wurde.

7. Verfahren nach einem der voranstehenden Ansprüche, bei dem ein im Verlauf der Überprüfung (40, 70) vereinzeltes Gerät (6, 8, 10) aus der Menge der zu vereinzelnden Geräte (6, 8, 10) entfernt wird.

8. Verfahren nach einem der voranstehenden Ansprüche, bei dem durch Messung der Stärke von überlagerten Antworten die Zahl der antwortenden Geräte (6, 8, 10) ermittelt wird und dieses Wissen genutzt wird, um die Suche in zumindest einem Unterbaum abzukürzen.

9. Kontrollelement zum Betreiben eines Netzwerks (2), das mit Geräten (6, 8, 10) des Netzwerks (2) verbunden ist und über das Netzwerk (2) mit diesen Geräten (6, 8, 10) kommuniziert, wobei das Kontrollelement (4) dazu ausgebildet ist, das Verfahren nach einem der voranstehenden Ansprüche durchzuführen.

## Claims

1. Method for operating a network (2) that has multiple devices (6, 8, 10), wherein there is provision for each device (6, 8, 10) of the network (2) to have an assigned serial number (16, 18, 20) that comprises multiple bit positions (22, 24, 26, 28), each bit position (22, 24, 26, 28) having one of two possible bit values, wherein the devices (6, 8, 10) are singularized on the basis of their serial numbers (16, 18, 20) during a check (40, 70), this involving an order in which the bit positions (22, 24, 26, 28) are checked and a counter with a value k being stipulated, wherein the check (40, 70) is started at the bit position (22, 24, 26, 28) that is to be checked first,
- in which a first query (42) for a k-th bit position (22, 24, 26, 28) involves at least one participating device (6, 8, 10) being asked whether the k-th bit position (22, 24, 26, 28) thereof has the first bit value from two possible bit values, and in which a second query (44) for the k-th bit position (22, 24, 26, 28) involves at least one participating device (6, 8, 10) being asked whether the k-th bit position (22, 24, 26, 28) thereof has the second bit value from two possible bit values,
- wherein the number of devices (6, 8, 10) that respond to the first query (42) is taken as a basis for deciding whether the check (40, 70) is continued with a second query (44) for the k-th bit position or whether the second query (44) is skipped for the k-th bit position and the check (40, 70) is continued with the first query (42) for a k+1-th bit position,
wherein
the check (40, 70) is continued with a most recently skipped second query (44) after a device (6, 8, 10) was singularized for a second query (44),
wherein the bit positions (22, 24, 26, 28 that are constant over the serial numbers (16, 18, 20) of all devices (6, 8, 10) are ascertained in a preselection and are then skipped during the check (40, 70), and performance of a current measurement is used to distinguish whether a query (42, 44) is responded to by no devices (6, 8, 10), precisely one device (6, 8, 10) or at least two devices (6, 8, 10),
wherein if the first query (42) is responded to by precisely one device (6, 8, 10), a singularization is performed for this responding device (6, 8, 10), which means that this now singularized device (6, 8, 10) participates in no further query (42, 44) for the check (40, 70),
wherein if the first query (42) for the k-th bit position (22, 24, 26, 28) is responded to by no devices (6, 8, 10), the second query (44) for the second bit value is performed for this k-th bit position (22, 24, 26, 28),
wherein if the first query (42) for the k-th bit position (22, 24, 26, 28) is responded to by at least two devices (6, 8, 10), the value k of the counter is increased by 1 and the first query (42) is performed for a subsequent k+1-th bit position (22, 24, 26, 28), wherein if the k-th bit position (22, 24, 26, 28) is simultaneously a bit position (28) that is to be checked last, then after the first query (42) for the bit position (22, 24, 26, 28) that is to be checked last, irrespective of how many devices (6, 8, 10) respond, the second query (44) is also performed for the bit position (22, 24, 26, 28) that is to be checked last and the check (40, 70) is then performed at the most recently skipped second query (44).

2. Method according to Claim 1, in which a distinction is drawn between different cases,
- wherein if the first query (42) is responded to by no devices (6, 8, 10) or precisely one device (6, 8, 10), the check (40, 70) is continued with the second query (44) for the k-th bit position (22, 24, 26, 28),
- wherein if the first query (42) is responded to by at least two devices (6, 8, 10), the second query (44) is skipped for the k-th bit position (22, 24, 26, 28) and the check (40, 70) is continued with the first query (42) for the k+1-th bit position (22, 24, 26, 28),
- wherein if the second query (44) is responded to by no devices (6, 8, 10), the check (40, 70) is continued at a most recently skipped second query (44),
- wherein if the second query (44) is responded to by precisely one device (6, 8, 10), the check (40, 70) is continued at a most recently skipped second query (44),
- wherein if the second query (44) is responded to by at least two devices (6, 8, 10), the check is continued with the first query (42) for the k+1-th bit position (22, 24, 26, 28).

3. Method according to Claim 1 or 2, in which there is provision for a distinction to be drawn concerning whether a query (42, 44) is responded to by no devices (6, 8, 10) or at least one device (6, 8, 10), wherein if the first query (42) is responded to by at least one device (6, 8, 10), the second query (44) for the second bit value is skipped for the k-th bit position (22, 24, 26, 28) and the check (40, 70) is continued with a first query (42) for the first bit value at a subsequent, k+1-th bit position (22, 24, 26, 28).

4. Method according to Claim 1, in which if the first query (42) at the k-th bit position (22, 24, 26, 28) is responded to by no devices (6, 8, 10) or precisely one device (6, 8, 10), the check (70) is continued with the second query (44) for the second bit value at the k-th bit position (22, 24, 26, 28), and in which if the first query (42) is responded to by at least two devices (6, 8, 10), the second query (44) for the second bit value is skipped and the check (40, 70) is continued with the first query (42) for the first bit value at the subsequent, k+1-th bit position (22, 24, 26, 28), wherein the second query (44) for the k-th bit position (22, 24, 26, 28) involves checking how many devices (6, 8, 10) participating therein have the second bit value, wherein if the second query (44) is responded to by no devices (6, 8, 10) or one device (6, 8, 10), the check (70) is continued with the most recently skipped second query (44), and wherein if the second query (44) is responded to by at least two devices (6, 8, 10), the check (70) is continued with the first query (42) for the first bit value at the subsequent, k+1-th bit position (22, 24, 26, 28).

5. Method according to one of the preceding claims, in which at least one device (6, 8, 10) responding to a query (42, 44) at a bit position (22, 24, 26, 28) that is to be checked last is singularized.

6. Method according to one of the preceding claims, in which the check (40, 70) is terminated if, after a reset (62) to the initially skipped query (44), the check (40, 70) was continued with said skipped query (44) at a k-th bit position (22, 24, 26, 28) and/or at the bit position (22, 24, 26, 28) to be checked first.

7. Method according to one of the preceding claims, in which a device (6, 8, 10) singularized in the course of the check (40, 70) is removed from the set of devices (6, 8, 10) to be singularized.

8. Method according to one of the preceding claims, in which measurement of the level of overlaid responses is used to ascertain the number of responding devices (6, 8, 10), and this knowledge is used to shorten the search in at least one subtree.

9. Control element for operating a network (2), which is connected to devices (6, 8, 10) of the network (2) and communicates with said devices (6, 8, 10) via the network (2), wherein the control element (4) is designed to perform the method according to one of the preceding claims.

## Revendications

1. Procédé d'exploitation d'un réseau (2) qui présente plusieurs appareils (6, 8, 10), dans lequel il est prévu d'attribuer à chaque appareil (6, 8, 10) du réseau (2) un numéro de série (16, 18, 20) comprenant plusieurs positions de bit (22, 24, 26, 28), chaque position de bit (22, 24, 26, 28) présentant l'une de deux valeurs binaires possibles, dans lequel, lors d'une vérification (40, 70), les appareils (6, 8, 10) sont séparés à l'aide de leurs numéros de série (16, 18, 20), dans lequel un ordre selon lequel les positions de bit (22, 24, 26, 28) sont vérifiées, ainsi qu'un compteur d'une valeur k sont fixés, la vérification (40, 70) commençant à la position de bit (22, 24, 26, 28) à vérifier en premier,
- dans lequel, pour une kème position de bit (22, 24, 26, 28), lors d'une première interrogation (42), au moins un appareil participant (6, 8, 10) est interrogé pour savoir si sa kème position de bit (22, 24, 26, 28) présente la première valeur binaire de deux valeurs binaires possibles, et dans lequel pour la kème position de bit (22, 24, 26, 28), lors d'une deuxième interrogation (44), au moins un appareil participant (6, 8, 10) est interrogé pour savoir si sa kème position de bit (22, 24, 26, 28) présente la deuxième valeur binaire de deux valeurs binaires possibles,
- dans lequel, en fonction du nombre d'appareils (6, 8, 10) qui répondent à la première interrogation (42), il est décidé si la vérification (40, 70) se poursuit par une deuxième interrogation (44) pour la kème position de bit, ou si la deuxième interrogation (44) pour la kème position de bit est ignorée et la vérification (40, 70) se poursuit par la première interrogation (42) pour une position de bit k+1,
dans lequel la vérification (40, 70), une fois qu'un appareil (6, 8, 10) a été séparé lors d'une deuxième interrogation (44), se poursuit par une deuxième interrogation (44) ignorée la dernière fois,
dans lequel on détermine lors d'une présélection les positions de bit (22, 24, 26, 28) qui sont constantes pour les numéros de série (16, 18, 20) de tous les appareils (6, 8, 10) et sont ensuite ignorées lors de la vérification (40, 70), et on décide en effectuant une mesure de courant si aucun appareil (6, 8, 10) ne répond, si exactement un appareil (6, 8, 10) répond ou si au moins deux appareils (6, 8, 10) répondent à une interrogation (42, 44),
dans lequel, au cas où exactement un appareil (6, 8, 10) répond à la première interrogation (42), une séparation est effectuée pour cet appareil répondant (6, 8, 10) de sorte que cet appareil (6, 8, 10) désormais séparé ne participe plus à aucune interrogation (42, 44) supplémentaire de la vérification (40, 70),
dans lequel, si aucun appareil (6, 8, 10) ne répond à la première interrogation (42) pour la kème position de bit (22, 24, 26, 28), la deuxième interrogation (44) pour la deuxième valeur binaire est effectuée pour cette kème position de bit (22, 24, 26, 28),
dans lequel, si au moins deux appareils (6, 8, 10) répondent à la première interrogation (42) de la kème position de bit (22, 24, 26, 28), la valeur k du compteur est incrémentée de 1 et la première interrogation (42) est effectuée pour une position de bit k+1 (22, 24, 26, 28) suivante,
dans lequel, au cas où la kème position de bit (22, 24, 26, 28) est en même temps une position de bit (28) à vérifier en dernier, après la première interrogation (42) pour la position de bit (22, 24, 26, 28) à vérifier en dernier, indépendamment du nombre d'appareils répondants (6, 8, 10), la deuxième interrogation (44) est également effectuée pour la position de bit (22, 24, 26, 28) à vérifier en dernier, et la vérification (40, 70) est ensuite effectuée lors de la deuxième interrogation (44) ignorée en dernier.

2. Procédé selon la revendication 1, dans lequel la décision est prise en fonction de différents cas,
- dans lequel, au cas où aucun appareil (6, 8, 10) ne répond ou exactement un appareil (6, 8, 10) répond à la première interrogation (42), la vérification (40, 70) se poursuit pour la kème position de bit (22, 24, 26, 28) par la deuxième interrogation (44),
- dans lequel, au cas où au moins deux appareils (6, 8, 10) répondent à la première interrogation (42), la deuxième interrogation (44) pour la kème position de bit (22, 24, 26, 28) est ignorée et la vérification (40, 70) pour la position de bit k+1 (22, 24, 26, 28) se poursuit par la première interrogation (42),
- dans lequel, au cas où aucun appareil (6, 8, 10) ne répond à la deuxième interrogation (44), la vérification (40, 70) se poursuit par une deuxième interrogation (44) ignorée en dernier,
- dans lequel, au cas où exactement un appareil (6, 8, 10) répond à la deuxième interrogation (44), la vérification (40, 70) se poursuit par une deuxième interrogation (44) ignorée en dernier,
- dans lequel, au cas où au moins deux appareils (6, 8, 10) répondent à la deuxième interrogation (44), la vérification pour la position de bit k+1 (22, 24, 26, 28) se poursuit par la première interrogation (42).

3. Procédé selon la revendication 1 ou 2, dans lequel il est prévu de distinguer si aucun appareil (6, 8, 10) ne répond ou au moins un appareil (6, 8, 10) répond à une interrogation (42, 44), dans lequel, au cas où au moins un appareil (6, 8, 10) répond à la première interrogation (42), pour la kème position de bit (22, 24, 26, 28), la deuxième interrogation (44) sur la deuxième valeur binaire est ignorée et la vérification (40, 70) se poursuit à une position de bit k+1 (22, 24, 26, 28) suivante par une première interrogation (42) pour la première valeur binaire.

4. Procédé selon la revendication 1, dans lequel, au cas où à la kème position de bit (22, 24, 26, 28), aucun appareil (6, 8, 10) ne répond ou exactement un appareil (6, 8, 10) répond à la première interrogation (42), la vérification (70) se poursuit à la kème position de bit (22, 24, 26, 28) par la deuxième interrogation (44) pour la deuxième valeur binaire, et dans lequel, au cas où au moins deux appareils (6, 8, 10) répondent à la première interrogation (42), la deuxième interrogation (44) sur la deuxième valeur binaire est ignorée et la vérification (40, 70) se poursuit à la position de bit k+1 (22, 24, 26, 28) suivante par la première interrogation (42) sur la première valeur binaire, dans lequel, lors de la deuxième interrogation (44), on vérifie pour la kème position de bit (22, 24, 26, 28) combien d'appareils (6, 8, 10) participant à celle-ci présentent la deuxième valeur binaire, dans lequel, au cas où aucun appareil (6, 8, 10) ne répond ou un appareil (6, 8, 10) répond à la deuxième interrogation (44), la vérification (70) se poursuit par la deuxième interrogation (44) ignorée en dernier, et dans lequel, au cas où au moins deux appareils (6, 8, 10) répondent à la deuxième interrogation (44), la vérification (70) se poursuit à la position de bit k+1 (22, 24, 26, 28) suivante par la première interrogation (42) sur la première valeur binaire.

5. Procédé selon l'une quelconque des revendications précédentes, dans lequel au moins un appareil (6, 8, 10) qui répond à une interrogation (42, 44) à une position de bit (22, 24, 26, 28) à vérifier en dernier est séparé.

6. Procédé selon l'une quelconque des revendications précédentes, dans lequel la vérification (40, 70) est terminée si la vérification (40, 70) après une remise (62) sur l'interrogation (44) ignorée la première fois à une kème position de bit (22, 24, 26, 28) et/ou à la position de bit (22, 24, 26, 28) à vérifier en premier s'est poursuivie par cette interrogation (44) ignorée.

7. Procédé selon l'une quelconque des revendications précédentes, dans lequel un appareil (6, 8, 10) séparé au cours de la vérification (40, 70) est éliminé de la quantité des appareils (6, 8, 10) à séparer.

8. Procédé selon l'une quelconque des revendications précédentes, dans lequel la mesure de l'importance des réponses superposées permet de déterminer le nombre des appareils répondants (6, 8, 10) et cette connaissance est exploitée pour abréger la recherche dans au moins une sous-arborescence.

9. Elément de contrôle pour exploiter un réseau (2), qui est relié à des appareils (6, 8, 10) du réseau (2) et communique avec ces appareils (6, 8, 10) par le réseau (2), l'élément de contrôle (4) étant réalisé pour effectuer le procédé selon l'une quelconque des revendications précédentes.
